# EUROPEAN PATENT APPLICATION

(11) **EP 2 682 668 A2**
(43) Date of publication of application: **08.01.2014**
(21) Application number: 12179807.8
(22) Date of filing: 09.08.2012
(51) Int. Cl.: F17C 13/08

(54) **Device for supplying gas under pressure and installation for producing and supplying electricity comprising such a device**

(30) Priority: 04.07.2012 IN DE20782012
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Binoist, Manuel, 110 011 New Delhi (IN); Sanglan, Patrick, 38180 SEYSSINS (FR); Kulshreshtha, Sachin, 110 011 New Delhi (IN); Dang Nhu, Guy, 38180 SEYSSINS (FR); Roussin-Bouchard, Xavier, 38112 MEAUDRE (FR)
(74) Representative: De Cuenca, Emmanuel Jaime

(57) **Abstract**

Device for supplying gas under pressure comprising a rack (3) accommodating a plurality of cylinders (8), the rack (3) comprising a bottom (7) and lateral walls (14) connected to the bottom (7) and delimiting a closed enclosure around the cylinders (8), the rack further comprising a perforated roof (15) connected to the upper ends of the lateral walls (14), the device comprising a common tap (10) having an upstream end fluidically connected to the orifice of each of the cylinders (8), the tap (10) having a downstream end connected to a fluidic connector (12) selectively connectable to a member for filling the cylinders (8) with gas and/or drawing off gas, characterized in that the connector (12) is situated in the enclosure adjacent a window (17) formed in a lateral wall (14), the device further comprising a unit (20) for controlling the gas drawn off from the cylinders (8), the control unit (20) accommodating a circuit (123) for controlling the drawn-off gas, the control circuit (123) comprising at least one pressure regulator (23) the outlet of which is selectively connectable (147) to apparatus (47) using the expanded gas coming from the cylinders (8) in the rack, the device further comprising a protective sheath (32) extending between the control unit (20) and the window (17), the sheath (32) accommodating a gas draw-off pipe (33) having an upstream end (36) selectively connectable to the connector (12) of the rack and a downstream end connected to the circuit (123) of the control unit (20).

## Description

The present invention concerns a device for supplying gas under pressure and an installation for producing and supplying electricity comprising such a device.

In areas where the mains electrical power supply is prone subject to failure, the power supply of mobile telecommunication sites is generally backed up in order to preserve the quality of service provided to users of the corresponding telecommunication networks. Telecommunication sites are generally backed up by batteries and by a generator set. In the event of interruption of the mains power supply, the batteries take over for a greater or lesser time period before the generator set is in turn started up. If the generator set should also have a problem, the remainder of the charge present in the batteries is used to supply power to the main utilities pending the intervention of a technician or the re-establishing of the electrical mains power supply.

There exist two main types of standardized architecture for telecommunication installations.

A first or "indoor" (ID) type comprises all the equipment installed in a cabinet protecting from inclement weather and external aggression. These cabinets ("shelters") are generally equipped with air conditioners to maintain the electrical equipment at a regulated temperature from 25 to 30°C to guarantee their correct operation and their longevity. In the normal operating mode, the air conditioners are supplied with alternating current via an electrical mains supply and the air conditioning stops if the electrical mains supply fails. Air conditioning resumes as soon as the generator set is started. The battery provides the continuity of power supply to the electrical equipment.

A second or "outdoor" (OD) type of installation provides equipment installed outdoors or in ventilated cabinets. This type of installation benefits from equipment of the latest generation, notably an extended temperature range that enables the use of air conditioners to be avoided.

In an area that is subject to frequent interruption of the electrical mains power supply, for example 12 hours a day on average, the installations are backed up by a standby generator.

The electrical power consumption of an outdoor (OD) site (with no air conditioning) corresponds to the power consumption of the telecommunication equipment, approximately 1.5 kW, for example. The electrical power consumption of an indoor site (with air conditioning) is approximately twice that of an outdoor site.

One solution for reducing in particular emissions of CO₂ consists in replacing the generator sets with fuel cells. To effect this replacement it would ideally be necessary to provide the fuel cell instead and in place of the generator set on the concrete foundation slab provided on the site for this purpose.

In one example of such an installation, the generator set has a power rating of 15 kVA (kilovoltamperes) and is installed on a concrete foundation slab having a footprint of 3 m x 1.5 m, including the fuel tank for the generator set.

An equivalent installation with a fuel cell comprises a fuel cell with an average power rating of 5 kW with a footprint of approximately 1 m x 1 m, two racks of 12 cylinders storing hydrogen at 200 bar integrated into a protective enclosure. The installation is placed on a concrete foundation slab 4.25 m x 2 m.

The additional area necessary for replacing the generator set by a cell is slowing the deployment of fuel cells. Moreover, the system for supplying a fuel cell with hydrogen must also meet more constraining safety standards.

Such hydrogen installations for feeding fuel cells must avoid confinement in order to prevent the accumulation of gas and the aggravated consequences in the event of ignition of trapped leaks. In industrial installations, the absence of confinement is easy to provide for because the footprint of the installation is not a constraint. Accordingly, for an installation with two racks, the footprint of the installation is approximately 3.2 m x 3 m minimum. This area on the ground is generally delimited by a grille or a fence and a first enhanced safety area must be added 2 metres beyond the hydrogen storage area in which no oxidizing, toxic or corrosive products must be stored. Another set of regulations imposes a second safety area that positions the hydrogen storage area at a distance of 4 metres with the property limit and a chimney discharging gases purged from and otherwise rejected from the installation at a height greater than 2.5 metres above the ground.

The installation must also make provision for minimizing the risks of external aggression whilst being compatible with the logistical constraints on changing racks of cylinders. The racks of cylinders are generally replaced by means of a crane by vertical manipulation of the racks or a forklift truck by horizontal manipulation of the racks.

The installation must moreover enable the emergency evacuation of operatives in the event of accidental leaks of hydrogen.

An object of the present invention is to palliate some or all of the drawbacks of the prior art listed above.

To this end, the device of the invention for supplying under pressure gas, notably hydrogen, comprises a rack accommodating a plurality of cylinders of gas under pressure, the rack comprising a bottom on which the cylinders rest and lateral walls connected to the bottom and delimiting a closed enclosure around the cylinders, the rack further comprising a perforated roof connected to the upper ends of the lateral walls, the device comprising a common tap having an upstream end fluidically connected to the orifice of each of the cylinders, the tap having a downstream end connected to a fluidic connector selectively connectable to a member for filling the cylinders with gas and/or drawing off gas, the connector being situated in the enclosure adjacent a window formed in a lateral wall, the device further comprising a unit for controlling the gas drawn off from the cylinders, the control unit accommodating a circuit for controlling the drawn-off gas, the control circuit comprising at least one pressure regulator the outlet of which is selectively connectable to apparatus using the expanded gas coming from the cylinders in the rack, the device further comprising a protective sheath extending between the control unit and the window, the sheath accommodating a gas draw-off pipe having an upstream end selectively connectable to the connector of the rack and a downstream end connected to the circuit of the control unit.

Moreover, embodiments of the invention may include one or more of the following features:
- the sheath accommodates a gas evacuation pipe having an upstream first end connected to the control circuit and a downstream end emerging outside the device, in the upper part of the rack, to release gas purged or released via the control circuit,
- the upstream end of the gas evacuation pipe comprises a wound portion forming at least one turn enabling adaptation of the heightwise position of the downstream end of said gas evacuation pipe relative to the rack,
- the device includes a protective and positioning plate threaded over the upper end of the cylinders via respective orifices, the cylinders being held apart from each other by the plate at a distance up to one centimetre,
- the control circuit comprises at least one of the following members: a fixed or adjustable pressure regulator, a pressure sensor measuring the pressure in the gas pipe, a purge pipe provided with at least one purge valve adapted to evacuate selectively gas under pressure present in the control circuit, an isolating valve for selectively interrupting the circulation of the fluid coming from the cylinders, at least one safety valve for evacuating gas from the circuit in the event of fire, a member for remote transmission of information, notably wireless transfer of pressure information obtained by the pressure sensor, a gas outlet connected to a pipe connectable to apparatus using gas, two gas inlets connected in parallel to a gas outlet via a switch member for connecting the gas outlet and one of the gas inlets in parallel,
- the protective sheath has a rigid structure, the lower end of the sheath being connected to the control unit via an elastic articulation allowing angular movement of the sheath relative to the unit,
- the downstream end of the draw-off pipe situated in the control unit comprises a wound portion forming at least one turn enabling adaptation of the heightwise position of the upstream end (36) connectable to the connector of the rack,
- the device comprises a cap for selectively protecting the connector, the cap being mobile outside the enclosure between an active position in which the cap is hooked onto the rack and forms a screen around the window preventing access to the connector and an inactive position in which the cap does not form a screen around the window, enabling access to the connector,
- the device comprises a restraining cable having a first end hooked onto a fixed anchorage separate from the rack and a second end comprising an attachment member selectively and detachably hooked onto a conjugate attachment point of the rack,
- the second end of the restraining cable comprises a cover that blocks access to the connector of the rack if the attachment member of the first end of the restraining cable is not hooked onto its attachment point on the rack,
- the sheath is movable vertically between a first relatively low position relative to the window and a relatively high position relative to the window, when the attachment member of the first end of the restraining cable is not hooked onto its attachment point on the rack, the cover is in a position forming a stop for preventing the sheath from going from its first position to the second position, when the attachment member of the first end of the restraining cable is hooked onto its attachment point on the rack the cover is in a position allowing the sheath to go from its first position to the second position,
- the device comprises, displaced on respective bottoms, two distinct racks each accommodating a plurality of cylinders of gas under pressure, each rack comprising lateral walls connected to the bottom and delimiting a closed enclosure around the cylinders concerned, over all the height of the cylinders, each rack further comprising a perforated roof connected to the upper ends of the lateral walls, each rack comprising a tap common to the cylinders in the rack, each tap having an upstream end fluidically connected to the orifice of each of the cylinders in the rack, each tap having a downstream end connected to a fluidic connector selectively connectable to a member for filling the cylinders with gas and/or drawing off gas, the connector of each rack being situated in the enclosure concerned of the rack and adjacent a window formed in a lateral wall of the rack concerned, the unit for controlling the gas drawn off from the cylinders being common to the two racks of cylinders, the circuit of the control unit for controlling the gas drawn off comprising two pressure regulators intended to be connected to the respective connectors of the racks, the two regulators being connected in parallel to an automatic or non-automatic switch member assuring selective switching of the gas delivered by a first rack of cylinders and then from the second rack of cylinders to a common outlet connectable to apparatus using the expanded gas coming from one of the racks of cylinders.
- the draw-off pipe and/or the evacuation pipe is of the rigid type, i.e. distinct from a pipe of flexible type, the control unit is fastened to the bottom of a rack,
- the protection and positioning plate is disposed in a horizontal position at the upper end of the cylinders, at least part of the border of the plate being distant from the lateral walls of the rack by a distance from 0.5 cm to 1 cm,
- at least part of the border of the plate is raised toward the top of the rack to guide any leakage of gas into the enclosure,
- at least part of the face of the lateral walls facing the border of the plate is bent or curved to form a gas passage diverging upwardly between the plate and the wall,
- the plate comprises respective orifices in which the necks of the cylinders are fixed,
- the cylinders are fixed in the orifices of the plate via respective fixing members such as nuts cooperating with a threaded portion of the necks of the cylinders,
- at least one lateral wall is composed of two panels assembled together, namely an upper panel and a lower panel,
- the rack includes a skeleton structure formed of bars, the upper panel and the lower panel being fixed to the bars via fixing members such as screw systems,
- the lower border of the upper panel is received in a support groove situated at the level of the upper border of the lower panel,
- the roof comprises a grille or grid,
- the area of the control unit accommodating the control circuit is delimited by lateral walls and is provided with a mesh lid surmounted by a lid inclined to the horizontal,
- the cap is mounted so as to be mobile in translation on the sheath,
- in an active position the cap is selectively hooked via a lug onto an upper edge of the rack, notably an upright of the rack or a border of the window,
- in an inactive position the lug of the cap is unhooked from the upper border of the rack,
- the device comprises a member for selectively locking the cap onto the rack in its active or inactive position,
- each rack comprises twelve cylinders (or more depending on the applicable regulations) of gaseous hydrogen stored at a pressure from 200 to 800 bar.

The invention may also concern an installation for producing and supplying electricity comprising a fuel cell, notably of the proton exchanger membrane type, the cell being fed with gaseous hydrogen from a device for supplying hydrogen gas under pressure, wherein the device for supplying hydrogen gas under pressure conforms to any one of the above features or below feraures.

The installation might comprise a telecommunication site selectively supplied with electrical power by the fuel cell.

Thus the invention may provide any one or more of the following features, as required:
- reducing the footprint of the device to a level equivalent to that of a generator set in compliance with safety constraints in respect of equipment and persons,
- placing safety perimeters, derived from a risk analysis, at the frontier of the peripheral enclosure, in conformance with regulations,
- proposing an installation that is easy to use (easy simplified connection) and has low installation costs,
- replacing an existing generator set (when logistics allow),
- using a reliable integrated component architecture,
- being compatible with restocking of cylinder racks by crane or forklift,
- using standardized fluidic connections upstream of the hydrogen storage area and downstream of the fuel cell,
- providing an installation necessitating no connection works on site and reduced or zero maintenance of the passive components of the installation,
- protecting operatives because their operations are carried out outside the protective enclosure, which enhances safety,
- defining the installation as a standardized industrial product with expectations of greatly reducing costs.

The invention may equally concern any alternative device or method comprising any combination of the characteristics referred to above or hereinafter.

Other features and advantages will become apparent on reading the following description, given with reference to the figures, in which:
- Figure 1 represents a diagrammatic partial perspective view showing an example of an installation for producing and supplying electricity using a fuel cell and provided with a hydrogen supply device of one embodiment of the invention,
- Figure 2 represents a diagrammatic and partial side view in vertical section showing one example of an installation of the invention,
- Figure 3 represents a diagrammatic and partial perspective view showing a detail of an installation conforming to Figure 1,
- Figure 4 represents a diagrammatic and partial perspective view showing a detail of an arrangement of gas pipes of the Figure 3 installation,
- Figure 5 represents a diagrammatic and partial perspective view showing a detail of a control unit of the installation from Figure 3,
- Figure 6 represents a diagrammatic and partial perspective view showing an example of a rack of cylinders of the installation of the invention,
- Figure 7 represents a diagrammatic and partial perspective view showing a detail of one end of a sheath of the Figure 3 installation,
- Figures 8 and 9 represent diagrammatic and partial side views in vertical section and in respective configurations of a detail of a possible embodiment of the installation from Figure 2,
- Figures 10 and 11 represent perspective views corresponding to Figures 8 and 9, respectively,
- Figure 12 represents a diagrammatic and partial view in section of a detail from Figure 2 showing one method of fixing a protection plate to the cylinders,
- Figure 13 represents two views to a larger scale and in section of a detail from Figure 2 showing two gas paths in the event of a leak,
- Figure 14 represents a diagrammatic perspective view partially in section of a detail of a frame according to another possible embodiment.

The device of the invention comprises two main components, namely:
- a frame 3 or, preferably, a pair of frames 3 of cylinders 8 of gas under pressure (hydrogen), and
- a unit 20 for controlling the gas leaving the racks 3.

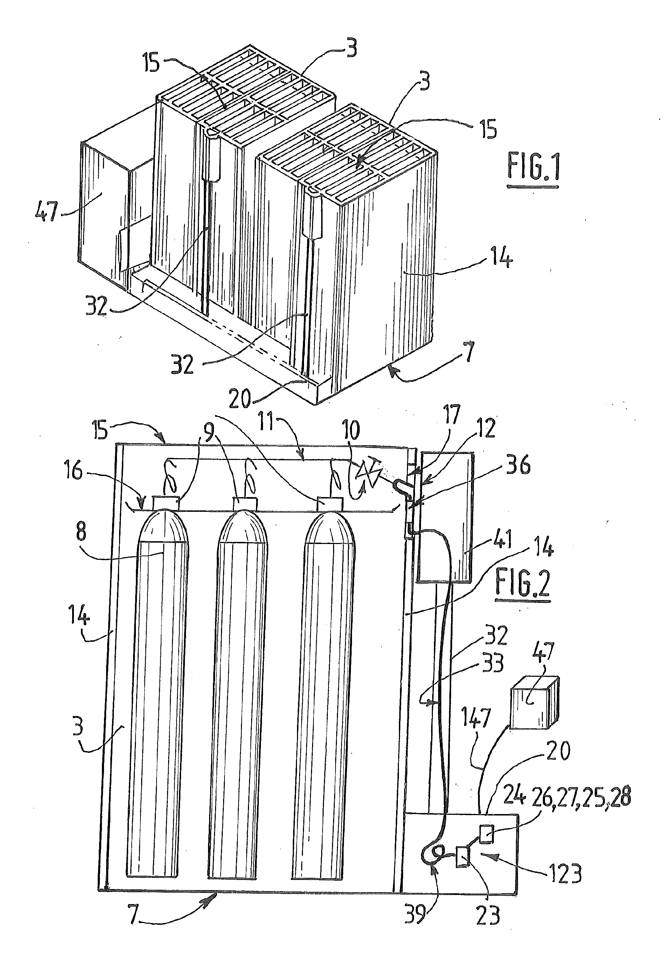

As shown notably in Figures 1 and 2, each rack 3 has a bottom 7 forming a robust chassis on which the cylinders 8 are disposed.

Each rack 3 comprises lateral walls 14 connected to the bottom 7 and delimiting a closed enclosure around the cylinders 8, preferably over the full height of the cylinders 8. These walls 14 form a continuous and solid partition around the cylinders 8. At least some of the walls 14 might be opened at their lower end. These walls 14 may be fixed or removable and are designed to provide the function of a protective enclosure.

The rack 3 further comprises a perforated roof 15 connected to the upper ends of the lateral walls 14.

Each cylinder 8 is equipped with a cylinder connector 9, for example screwed into the threaded orifice of the head of the cylinder 8. Each cylinder connector 9 is connected (in parallel) to a common tap 10 via connecting pipework 11. On its downstream side, the tap 10 is connected to a connector 12. Note that the terms "upstream" and "downstream" designate relative positions according to the flow of the gas (here drawing off gas from the cylinders 8 to a consumer application).

The connector 12 is provided to enable connection of the frames 3 of cylinders 8 to an installation using the gas from the cylinders 8, for example to supply a fuel cell 47 with fuel (hydrogen). Similarly, the connector 12 downstream of the cylinder is provided to enable connection of the cylinder rack 3 to a packaging centre for filling the cylinders. These drawing off and filling operations are generally carried out by means of high-pressure hoses.

To this end, the connector 12 is situated in the enclosure adjacent a window 17 formed in a lateral wall 14, preferably in the upper portion of a lateral wall 14.

The racks 3 preferably have identical standardized dimensions and likewise the positioning of the tap 10 and the connector 12.

As visible in Figure 2, each rack 3 preferably includes a protective plate 16 positioned over the heads of the cylinders 8, notably to hold them apart. For example, the protective plate 16 is threaded over the upper end of the cylinders 8 by means of respective orifices 21. For example, the cylinders 8 are held apart from each other at a distance up to 3 cm and preferably up to 1 cm. This function of the plate 16 is particularly advantageous if the cylinders 8 are made of a composite material, to avoid contact between the cylinders 8.

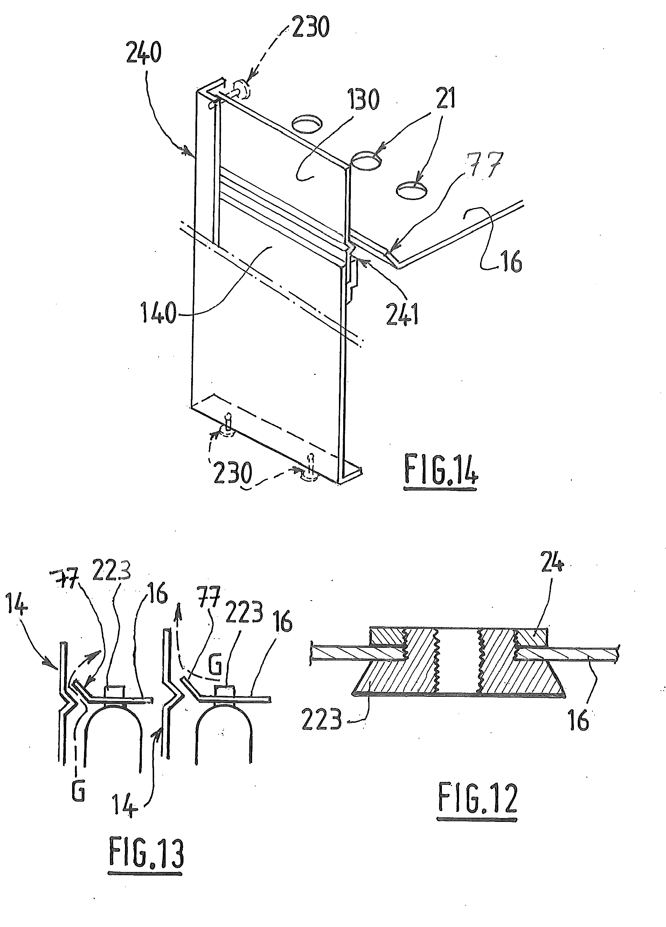

As can be seen in Figure 12, the cylinders 8 are for example fixed in respective orifices of the plate 16 via respective fixing members such as nuts 24 cooperating with a threaded portion of the necks 223 of the cylinders 8.

Similarly, as shown in Figures 13 and 14, at least a portion of the face of the lateral walls 14 situated facing the border 17 of the plate 16 may be bent or curved to form a gas passage diverging upwardly between the plate 16 and the wall 14. In this way, any gas G leaking above the plate 16 does not tend to diffuse under the plate 16 but rather upward. Similarly, any gas leaking under the plate 16 tends to escape upward via the passage between the plate and the lateral walls 14. These gas paths are symbolized by dashed line arrows in Figure 13.

As shown in the Figure 14 variant, a lateral wall or the lateral walls 14 may be composed of two panels assembled together, respectively an upper panel 130 and a lower panel 140. The rack may include a skeleton structure formed of bars, the upper panel 130 and the lower panel 140 being fixed to the bars 240 via fixing members 230 such as systems of bolts. Similarly, as may be seen in Figure 14, the lower border of the upper panel 130 may be received in a support groove 241 situated at the level of the upper edge of the lower panel 140.

Moreover, in the event of leaking of inflammable gas at the level of a connector 9 of a cylinder 8, the protective plate 16 prevents aggression of the other cylinders notably should a flame (flaming spear) be formed on one of the cylinders 8.

The plate 16 preferably has its edges 77 raised upward to prevent any confinement of gas in the event of a leak on the body of a cylinder 8. To this end, the border of the plate is spaced from the lateral walls 14 to avoid forming a closed volume between the cylinders 8 and the walls 14.

The roof 15 of each rack 3 has an open apertured structure (for example consisting or bars and/or a grille). This makes it possible to evacuate gas leaks in a natural way, channelling them upward and out of the rack 3.

The roof 15 is preferably equipped with a grille to prevent any intrusion and malicious action on the connectors 9, 12 and the tap 10.

In the normal configuration the tap 10 and the connector 12 are thus accessible only via the window 17. This window 17 is formed for example by a cutout in a wall 14. In this way, the safety area in the horizontal plane is limited to the surface of the bottom 7 of the rack 3.

In the Figure 1 example, two racks 3 of cylinders 8 are connected to a common control unit 20 for controlling the drawn off gas. This gas control unit 20 has the main function of assuring and controlling the distribution of gas from the cylinders 8 in the racks 3 to user apparatus, notably a fuel cell 47.

The control unit 20 is for example installed on a concrete foundation slab of the installation or any other appropriate structure.

The control unit 20 forms a closed box. This unit 20 accommodates within it a gas control circuit 123.

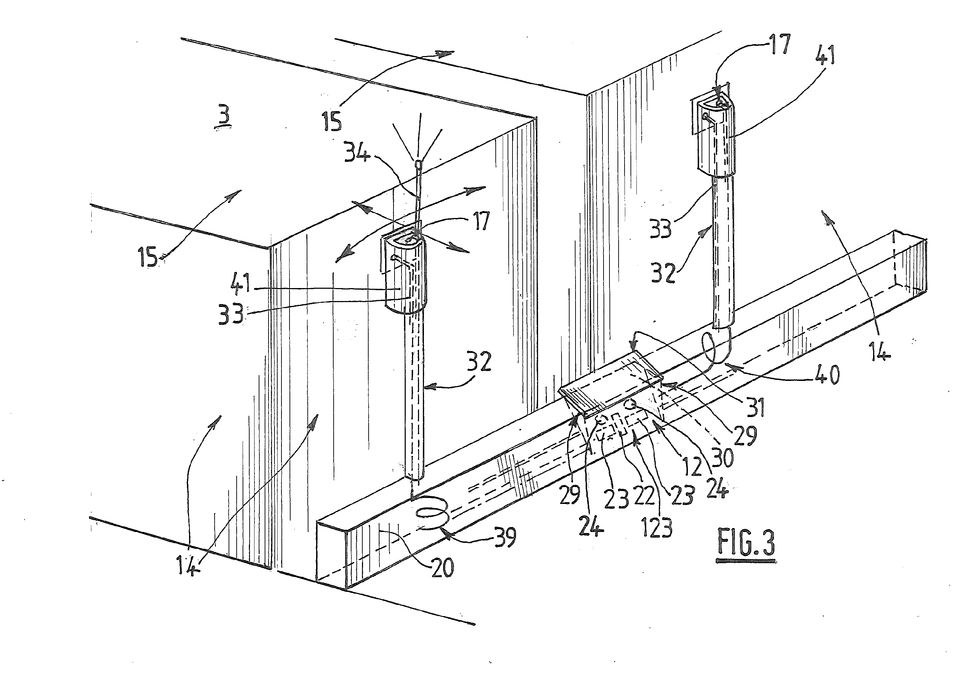

This circuit 123 preferably has two ends connected in parallel to an automatic changeover device 22 via two pressure regulators 23 to expand the gas from the cylinders 8 to a lower pressure required by the fuel cell 47 and to regulate the pressure (fig. 3) . The circuit 123 preferably also includes one or more pressure transmitters 24 that measure and transmit continuously the evolution of the pressure in each rack 3 of cylinders 8. The circuit 123 also includes purge valves 25 necessary for conditioning the lines when starting up, during maintenance and during changing of the racks 3 (cf. Figure 2 which shows diagrammatically the units of the circuits 123).

The circuit 123 preferably also includes an automatic isolating valve 26 for shutting off the feed to the cell 47 in the event of a problem. This valve 26 preferably supplements a downstream valve controlling the supply of gas to the cell 47.

The circuit 123 also includes safety valves 27 and one or more general feed valves 28 situated upstream of the cell 47.

All these components are preferably grouped on a board and are installed inside the unit 20 in a volume delimited for example by two lateral separating walls 29.

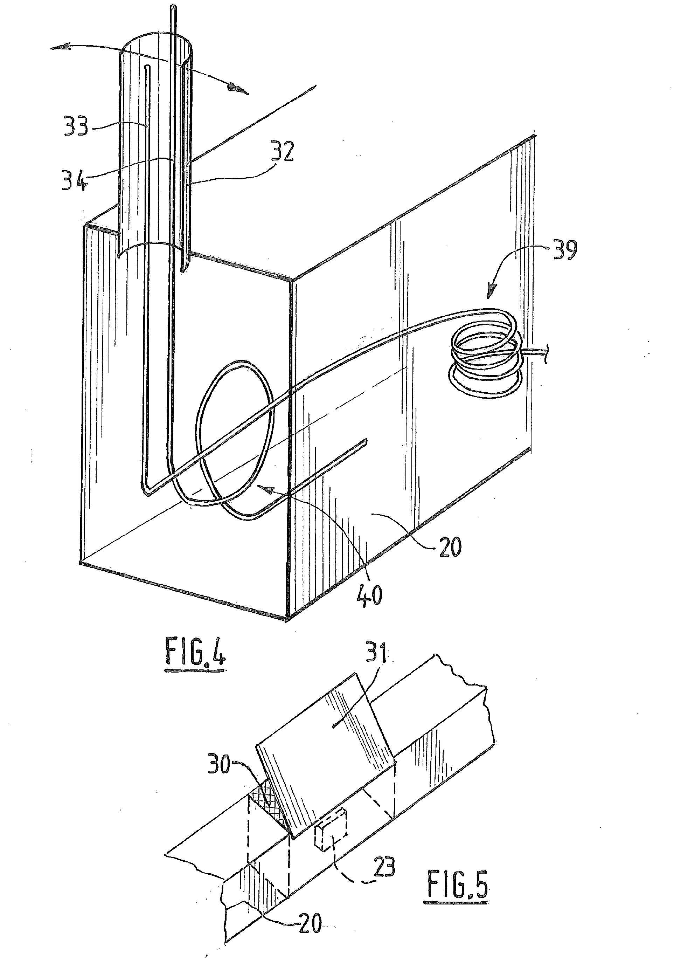

In its upper part the unit 20 is preferably closed by a fine-mesh lid 30 to prevent direct sight of the internal units of the circuit 123 whilst guaranteeing the absence of confinement of gas in the event of a leak (fig. 5). Above the units of the circuit the unit 20 may include a lid 31 that is inclined in the normal position. The inclined lid 31, constituted of sheet metal, for example, forms a screen favouring flow in the event of inclement weather. This structure also protects users in the event of a blowback.

Vertically in line with each window 17 enabling access to a connector 12 the device comprises a vertical protection sheath 32 extending between the control unit 20 and the window 17. Each sheath 32 accommodates a gas draw-off pipe 33 having an upstream end 36 intended to be selectively connected to the connector 12 of the rack and a downstream end connected to the circuit 123 of the control unit 20.

Each sheath 32 also accommodates a gas evacuation pipe (or chimney) 34 having an upstream first end connected to the control circuit 123 and a downstream end emerging to the exterior of the device, in the upper part of the rack 3, to release the gas purged or released by the control circuit 123. In other words, the evacuation pipe 34 has a height designed to reject the inflammable gas at a sufficient height to prevent all risk of burns in the event of ignition. These two evacuation pipes 34 form a double evacuation system having a low unitary flow rate compared to known installations with only one evacuation pipe.

A high-pressure draw-off pipe 33 emerges from the upper end of the sheath 32. This upper end of each pipe 33 is provided with a connector 36 complementary to the connector 12 of the rack 3 to enable connection via the window 17 in the lateral wall 14.

The lower end of each sheath 32 emerges into the unit 20 with the corresponding draw-off pipe 33 and the corresponding evacuation pipe 34. These lower ends of the draw-off pipes 33 and evacuation pipes 34 are connected, preferably horizontally connected, to the control circuit 123 of the unit 20.

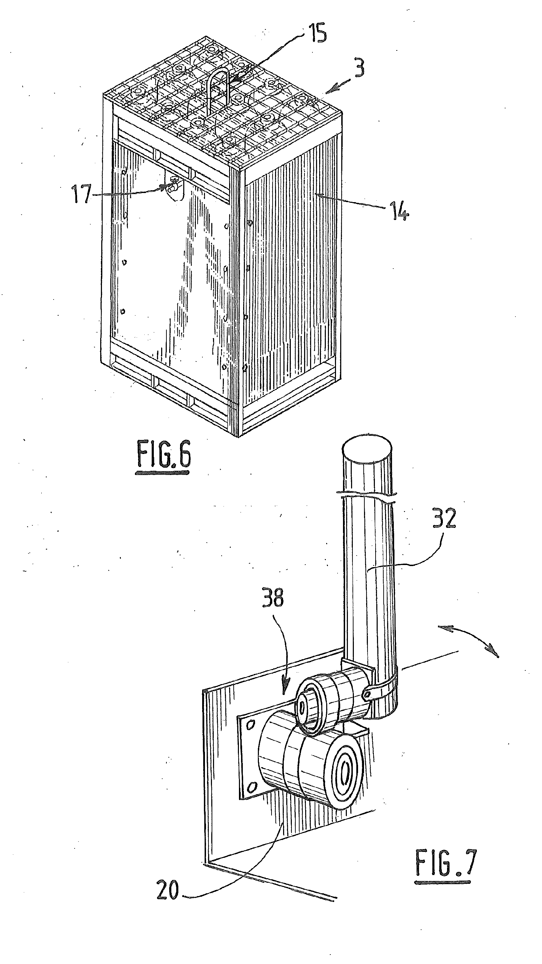

The lower end of the sheath 32 is preferably anchored mechanically to the unit 20 via an elastic articulation that allows movement in a horizontal plane (of the order of 250 mm) of the upper end of the sheath relative to the rack 3. This enables the upper end of the sheath 32 to be moved closer to the rack 3 to make connections. As shown by way of example in Figure 7, the elastic articulation 38 is for example of the type provided with a polymer and/or spring joint between the sheath 32 and an anchorage in the unit. The architecture of the joint comprises two cylindrical portions connected perpendicularly and each enabling for example a rotation of 30 degrees about their respective axis. For example the joint is of the type marketed by the company Paulstra® under reference BL56518.

As may be seen in Figure 4, the upstream end of the gas evacuation pipe 34 (situated in the unit 20) comprises a portion 40 wound with one or more turns enabling adaptation of the heightwise position of the upper end of the gas evacuation pipe 34.

Similarly, the downstream end of the draw-off pipe 33 situated in the control unit 20 preferably comprises a wound portion 39 preferably forming a plurality of turns, for example horizontal turns. This structure enables adaptation of the heightwise position of the upstream end 36 adapted to be connected to the connector 12 of the rack 3. The pipes 33 and 34 may thus be subject to vertical movements via this structure allowing adaptable positioning without impeding the movements of the sheath 32.

The amplitude of these possible vertical movements is preferably equal to the height of the unit 20 (for example from 250 to 300 mm).

Given the respective lengths of the pipework elements of the pipes 33, 34 (for example from 1 to 3 m) and the structure of the system, it is not necessary to provide intermediate welds on the pipes 33, 34. Welds may be provided only at the level of the ends of the pipes 33, 34. Moreover, the pipes 33, 34 do not need to have a flexible structure. To the contrary, pipes 33, 34 of rigid type may be provided whilst allowing adaptable positioning. This enables the reliability and the safety of the device to be increased at the same time as reducing installation and maintenance costs.

When the ends 36 of the draw-off pipes 33 are connected to the respective connectors 12 of the racks 3, each connection is preferably protected by a respective removable cap 41.

For example, as may be seen in Figures 2, 3, 8 and 9, a sliding cap 41 may be mounted around the upper end of the sheath 32.

For example, in the position protecting the connector 12, 36, the cap 41 is hooked onto the frame 30 at the level of a generatrix or border, for example an upper border, of the window 17 (see Figures 3, 8 and 10). For example, the cap 41 is selectively hooked in a high position protecting the connectors 12, 36 via a lug 141. The cap 41 is of sheet metal for example (like the walls 41 and the sheath 32) and the hooking lug 141 may be formed by bending the sheet metal of the cap 41 to a hook shape. A locking member may if necessary be provided for selectively locking the cap to the rack 3 in the position protecting the connectors (the protection position forming a screen preventing access to these connectors 12, 36 and to the window 17).

According to an advantageous feature, the device preferably comprises a restraining cable 44 for preventing movement of a rack 3 of cylinders when the connector of the rack 3 is still connected to the high-pressure draw-off pipe 33. This could pull off the high-pressure pipe 3 which could lead to serious injuries. An operator might forget to shut the tap 10 of the rack and disconnect the connectors 12, 36 beforehand.

This restraining cable 44 has a first end 144 hooked onto a fixed anchorage separate from the device, for example on a concrete foundation slab. The second end of the restraining cable 44 is selectively hooked, for example via an attachment member 45 such as a carabiner, over an attachment point of the rack. In the attached position, the cable 44 prevents movement of a rack 3 of cylinders 8.

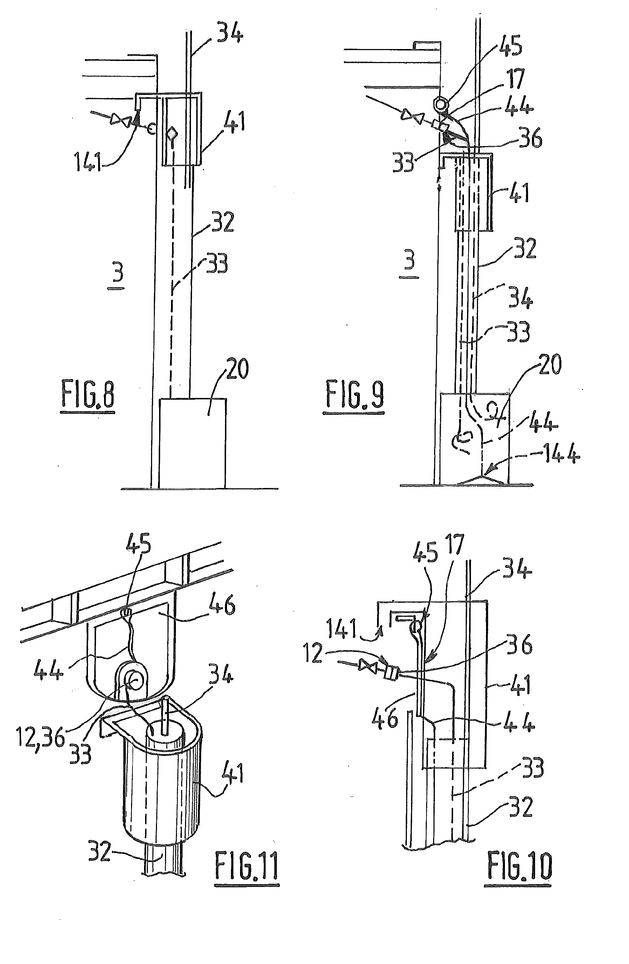

To oblige the operator to attach/detach this restraining cable 44, the second end of the cable 44 preferably also comprises a cover 46, such as a metal plate with dimensions slightly greater than the area of the access window 17 to the connector 12 of the rack 3. When the second end 45 of the restraining cable 44 is hooked onto the rack at its attachment point, the cover 46 is placed between the sheath 32 and the lateral wall 14 of the rack 3 (see Figures 10 and 11).

When the sheath 32 is moved into a relatively low position relative to the window 17 (see Figures 9 and 11), access to the connector 12 by an operator is possible only when the second end 45 of the restraining cable 44 is unhooked from its point of attachment to the rack (the default position of the cover 46 prevents such access).

The sheath 32 preferably cannot be placed in a relatively high position relative to the window 17 if the cover 46 is not disposed over the window 17 in a position blocking the window necessitating attachment of the second end 45 of the cable to its point of attachment on the rack 3. To be able to place the cover 46 in the high position and hook the cover 46 onto the rack via the lug 141, it is necessary for the cover 46 to be pressed into position over the window 17. The cover 46 can be retained only by hooking the second end of the cable 45 over its attachment point on the rack 3. The cover 46 is preferably painted in a bright colour to render it visible and to identify easily incorrect manipulation by an operator who has forced the cover 46 closed without connecting the cable 45 beforehand.

When the sheath 32 is in the high position (Figures 8 and 10), the cover 46 blocks the window 17 and the height of the sheath 32 prevents the operator from accessing the connector 12 via the upper opening of the cover 46.

A fuel cell 47 may be positioned symmetrically against one end of the device. The fluid connection of the circuit 123 to the cell 47 may be effected via low-pressure circuitry without special tools. Once the connection has been made, the various caps 41 are fitted to conceal and protect all the sensitive elements of the installation.

The cell 47 is fed with hydrogen from one rack and then, when the rack is empty, from the second (via the switch of the control circuit 123), and the empty rack may be replaced.

The footprint of such an installation may be contained to within 3 m x 1.5 m, which is the equivalent of a generator set. This architecture may be used for any compressed gas installation for which the footprint must be small and safety conditions must be guaranteed.

## Claims

1. Device for supplying gas under pressure, notably hydrogen, comprising a rack (3) accommodating a plurality of cylinders (8) of gas under pressure, the rack (3) comprising a bottom (7) on which the cylinders (8) rest and lateral walls (14) connected to the bottom (7) and delimiting a closed enclosure around the cylinders (8), the rack further comprising a perforated roof (15) connected to the upper ends of the lateral walls (14), the device comprising a common tap (10) having an upstream end fluidically connected to the orifice of each of the cylinders (8), the tap (10) having a downstream end connected to a fluidic connector (12) selectively connectable to a member for filling the cylinders (8) with gas and/or drawing off gas, **characterized in that** the connector (12) is situated in the enclosure adjacent a window (17) formed in a lateral wall (14), the device further comprising a unit (20) for controlling the gas drawn off from the cylinders (8), the control unit (20) accommodating a circuit (123) for controlling the drawn-off gas, the control circuit (123) comprising at least one pressure regulator (23) the outlet of which is selectively connectable (147) to apparatus (47) using the expanded gas coming from the cylinders (8) in the rack, the device further comprising a protective sheath (32) extending between the control unit (20) and the window (17), the sheath (32) accommodating a gas draw-off pipe (33) having an upstream end (36) selectively connectable to the connector (12) of the rack and a downstream end connected to the circuit (123) of the control unit (20).

2. Device according to Claim 1, **characterized in that** the sheath (32) accommodates a gas evacuation pipe (34) having an upstream first end connected to the control circuit (123) and a downstream end emerging outside the device, in the upper part of the rack (3), to release gas purged or released via the control circuit (123).

3. Device according to Claim 2, **characterized in that** the upstream end of the gas evacuation pipe (34) comprises a wound portion (40) forming at least one turn enabling adaptation of the heightwise position of the downstream end of said gas evacuation pipe (34) relative to the rack (3).

4. Device according to any one of Claims 1 to 3, **characterized in that** the device includes a protective and positioning plate (16) threaded over the upper end of the cylinders (8) via respective orifices, the cylinders (8) being held apart from each other by the plate (16) at a distance up to one centimetre.

5. Device according to any one of Claims 1 to 4, **characterized in that** the control circuit (123) comprises at least one of the following members: a fixed or adjustable pressure regulator (23), a pressure sensor (24) measuring the pressure in the gas pipe (33), a purge pipe provided with at least one purge valve adapted to evacuate selectively gas under pressure present in the control circuit (123), an isolating valve (26) for selectively interrupting the circulation of the fluid coming from the cylinders (8), at least one safety valve (27) for evacuating gas from the circuit in the event of fire, a member for remote transmission of information, notably wireless transfer of pressure information obtained by the pressure sensor, a gas outlet connected to a pipe (147) connectable to apparatus (47) using gas, two gas inlets connected in parallel to a gas outlet via a switch member (22) for connecting the gas outlet and one of the gas inlets in parallel.

6. Device according to any one of Claims 1 to 5, **characterized in that** the protective sheath (32) has a rigid structure, the lower end of the sheath (32) being connected to the control unit (20) via an elastic articulation (38) allowing angular movement of the sheath (32) relative to the unit (20).

7. Device according to any one of Claims 1 to 6, **characterized in that** the downstream end of the draw-off pipe (33) situated in the control unit (20) comprises a wound portion (39) forming at least one turn enabling adaptation of the heightwise position of the upstream end (36) connectable to the connector (12) of the rack (3).

8. Device according to any one of Claims 1 to 7, **characterized in that** it comprises a cap (41) for selectively protecting the connector (12), the cap (41) being mobile outside the enclosure between an active position in which the cap (41) is hooked onto the rack (3) and forms a screen around the window (17) preventing access to the connector (12) and an inactive position in which the cap (41) does not form a screen around the window (17), enabling access to the connector (12).

9. Device according to any one of Claims 1 to 8 **characterized in that** it comprises a restraining cable (44) having a first end hooked onto a fixed anchorage (144) separate from the rack (3) and a second end comprising an attachment member (45) selectively and detachably hooked onto a conjugate attachment point of the rack (3).

10. Device according to Claim 9 **characterized in that** the second end of the restraining cable (44) comprises a cover (46) that blocks access to the connector (12) of the rack if the attachment member (45) of the first end of the restraining cable (44) is not hooked onto its attachment point on the rack (3).

11. Device according to Claim 10 **characterized in that** the sheath (32) is movable vertically between a first relatively low position relative to the window (17) and a relatively high position relative to the window (17), when the attachment member (45) of the first end of the restraining cable (44) is not hooked onto its attachment point on the rack (3), the cover (46) is in a position forming a stop for preventing the sheath (32) from going from its first position to the second position, when the attachment member (45) of the first end of the restraining cable (44) is hooked onto its attachment point on the rack (3) the cover (46) is in a position allowing the sheath (32) to go from its first position to the second position.

12. Device according to any one of claims 1 to 11 **characterized in that** it comprises, displaced on respective bottoms (7), two distinct racks (3) each accommodating a plurality of cylinders (8) of gas under pressure, each rack (3) comprising lateral walls (14) connected to the bottom (7) and delimiting a closed enclosure around the cylinders (8) concerned, over all the height of the cylinders (8), each rack (3) further comprising a perforated roof (15) connected to the upper ends of the lateral walls (14), each rack comprising a tap (10) common to the cylinders (8) in the rack (3), each tap (10) having an upstream end fluidically connected to the orifice of each of the cylinders (8) in the rack (3), each tap (10) having a downstream end connected to a fluidic connector (12) selectively connectable to a member for filling the cylinders (8) with gas and/or drawing off gas, the connector (12) of each rack (3) being situated in the enclosure concerned of the rack (3) and adjacent a window (17) formed in a lateral wall (14) of the rack (3) concerned, the unit (20) for controlling the gas drawn off from the cylinders (8) being common to the two racks (3) of cylinders (8), the circuit (123) of the control unit (20) for controlling the gas drawn off comprising two pressure regulators (23) intended to be connected to the respective connectors (12) of the racks (3), the two regulators being connected in parallel to an automatic or non-automatic switch member (22) assuring selective switching of the gas delivered by a first rack (3) of cylinders (8) and then from the second rack (3) of cylinders to a common outlet (147) connectable to apparatus using the expanded gas coming from one of the racks (3) of cylinders (8).

13. Installation for producing and supplying electricity comprising a fuel cell (47), notably of the proton exchanger membrane type, the cell (47) being fed with gaseous hydrogen from a device for supplying hydrogen gas under pressure, **characterized in that** the device for supplying hydrogen gas under pressure conforms to any one of Claims 1 to 12.

14. Installation according to Claim 13, **characterized in that** it comprises a telecommunication site selectively supplied with electrical power by the fuel cell.
